# EUROPÄISCHE PATENTSCHRIFT

(11) **EP 2 466 208 B1**
(45) Veröffentlichungstag und Bekanntmachung des Hinweises auf die Patenterteilung: **20.02.2019**
(21) Anmeldenummer: 11192937.8
(22) Anmeldetag: 12.12.2011
(51) Int. Cl.: F24C 7/08, F24C 15/00, B60K 37/06

(54) **BACKOFEN MIT EINER BEDIENVORRICHTUNG**
BAKING OVEN WITH AN OPERATING DEVICE
FOUR DE CUISSON AVEC UN DISPOSITIF DE COMMANDE

(30) Priorität: 16.12.2010 DE 102010063189
(43) Veröffentlichungstag der Anmeldung: 20.06.2012
(73) Patentinhaber: BSH Hausgeräte GmbH, 81739 München (DE)
(72) Erfinder: Ludwig, Jörn, 80634 München (DE); Nüssler, Gerhard, 80798 München (DE); Rieser, Frank, 82194 Gröbenzell (DE); Tesseraux, Dominik, 14548 Schwielowsee (DE); Thielen, Heiko, 82152 Planegg (DE)

(56) Entgegenhaltungen:
- EP-A2- 0 844 325
- WO-A2-2009/047437
- FR-A1- 2 917 514
- GB-A- 2 445 445
- US-A- 5 834 745
- US-A1- 2004 056 847

## Beschreibung

Die Erfindung betrifft einen Backofen mit einer Bedienvorrichtung mit einem elektronischen Anzeige- und Bedienfeld und einem Bedienelement, welches zur Einstellung von Betriebsbedingungen des Backofens relativ zum Anzeige- und Bedienfeld bewegbar ist.

Die DE 10 2008 032 450 A1 beschreibt ein Gargerät mit einem Touchscreen, über welchen Einstellungen des Gargeräts vorgenommen werden können.

Die EP 0 844 325 A2 beschreibt eine Betätigungs- und Anzeigevorrichtung für eine Waschmaschine. Hierbei ist zum Einstellen und Anzeigen unterschiedlicher Grundprogramme ein einziger Schalter vorgesehen, welcher als Dreh-Betätigungsknopf ausgebildet ist. Durch Betätigen dieses Dreh-Betätigungsknopfes werden auf einer Anzeige die unterschiedlichen Grundprogramme dargestellt. Der Dreh-Betätigungsknopf ist an der Vorderseite einer vor der Anzeige angeordneten Frontblende angeordnet, und die Betätigungsübertragung erfolgt berührungslos über einen magnetoresistiven Mechanismus.

Weiterer relevanter Stand der Technik ist aus den Dokumenten US 2004/056847 A1, WO 2009/047437 A2, GB 2 445 445 A, FR 2 917 514 A1 bekannt. Die US 5 834 745 A offenbart die Merkmale des Oberbegriffes des Anspruchs 1.

Es sind Bedienvorrichtungen für ein Hausgerät bekannt, die digitale Anzeige- und Bedienfelder aufweisen, in denen Text und/oder Buchstaben angezeigt werden. Darüber hinaus können auch Zahlen oder Symbole angezeigt werden. Derartige Displays sind üblicherweise als eigenständige Komponenten in einer Bedienvorrichtung vorhanden. Separat und beabstandet dazu können Bedienelemente vorgesehen sein, die beispielsweise als Drehwähler oder Drücktasten oder Kippschalter ausgebildet sind. Darüber hinaus sind berührsensitive Bedienfelder bekannt, wie sie beispielsweise durch Touchscreens oder dergleichen realisiert sind.

Es ist Aufgabe der vorliegenden Erfindung, einen Backofen mit einer Bedienvorrichtung zu schaffen, welche die mechanisch stabile Ausgestaltung und Betätigungsmöglichkeit eines manuell bewegbaren Bedienelements gewährleistet, wobei darüber hinaus die Bedienvorrichtung im Hinblick auf die Flächenausmaße kompakt und minimiert ausgestaltet werden soll und ferner die Informationspräsentation auf dem elektronischen Anzeige- und Bedienfeld bei Betätigung des Bedienelements leicht wahrnehmbar erfolgen soll.

Diese Aufgabe wird durch einen Backofen, welcher die Merkmale nach Anspruch 1 aufweist, gelöst.

Der erfindungsgemäße Backofen mit der Bedienvorrichtung für den Backofen umfasst ein elektronisches Anzeige- und Bedienfeld, welches mit einer für Licht des Anzeige- und Bedienfelds durchlässigen Abdeckung abgedeckt ist. Die Abdeckung und das Anzeige-und Bedienfeld sind von einer Bedienblende der Bedienvorrichtung zumindest bereichsweise umrandet. Die Vorderseite der Abdeckung ist nach hinten versetzt zu einer Vorderseite der an die Abdeckung anschließenden und die Anzeigeeinheit zumindest teilweise umrandenden Bedienblende angeordnet ist. In einem durch den Versatz der Vorderseite der Abdeckung und der Vorderseite der Bedienblende ausgebildeten Freiraum sind Auflageelemente mit Auflageflächen zur Betätigungsunterstützung von berührsensitiven Bedienstellen des Anzeige- und Bedienfelds ausgebildet, wobei die Bedienstellen im unteren Bereich des Anzeige- und Bedienfelds benachbart zu den Auflageelementen ausgebildet sind.

Durch diese bei einer die Bedieneinrichtung von vorne betrachteten Blickrichtung ist somit quasi die Abdeckung nach hinten und in die Bedienvorrichtung hineinversetzt angeordnet. Zum einen kann dadurch auch ein gewisser Schutz der Frontseite der Abdeckung erzielt werden und andererseits durch die nach vorne versetzte Frontwand auch eine gewisse Blendschutzwirkung für die anzuzeigenden Informationen, die durch die Abdeckung hindurch gesehen werden können, erzielt werden.

Bei dem erfindungsgemäßen Backofen ist ein Bedienelement ausgebildet, welches zur Einstellung von Betriebsbedingungen des Backofens relativ zum Anzeige- und Bedienfeld bewegbar ist.

Bei dem erfindungsgemäßen Backofen ist das Anzeige- und Bedienfeld mit einer für das Licht des Anzeige- und Bedienfelds durchlässigen Abdeckung abgedeckt, und es ist das Bedienelement an der Abdeckung angeordnet. Zum einen kann dadurch die Elektronik des Anzeige- und Bedienfelds und das tatsächliche Display vor Beschädigungen oder Verschmutzung geschützt werden und darüber hinaus dient die Abdeckung zusätzlich als mechanischer Träger.

Das Bedienelement ist hierbei zumindest bereichsweise innerhalb dem Anzeige- und Bedienfeld angeordnet. Dies bedeutet, dass im Hinblick auf die Ausmaße des elektronischen Anzeige- und Bedienfelds das Bedienelement mit seinen frontseitigen Ausmaßen zumindest bereichsweise hineinragend in die Fläche des Anzeige- und Bedienfelds positioniert ist. Mit einem elektronischen Anzeige- und Bedienfeld wird insbesondere ein Display verstanden, auf dem Informationen dynamisch wechselnd anzeigbar sind. Dies können Informationen umfassend Buchstaben und/oder Zahlen und/oder Symbole sein.

Das Bedienelement ist somit im Hinblick auf seine Anordnung und Flächenpositionierung zumindest bereichsweise eingebettet in der Fläche des Anzeige- und Bedienfelds angeordnet.

Mit der zumindest teilweisen Anordnung des Bedienelements innerhalb der Flächenausmaße des Anzeige- und Bedienfelds ist insbesondere auch die Ausführung darunter zu verstehen, bei der die Kontur des Rands des Bedienelements im Bereich, in dem es dem Anzeige- und Bedienfeld zugewandt ist, an die Kontur des Flächenrands des Anzeige- und Bedienfelds formverlaufsmäßig angepasst ist und diese Konturenverläufe praktisch direkt aneinander angrenzen.

Hierbei ist das Bedienelement zumindest bereichsweise mit seinen Flächenausmaßen direkt vor dem Anzeige- und Bedienfeld angeordnet und somit das Anzeige- und Bedienfeld zumindest praktisch teilweise verdeckend angeordnet. Insbesondere werden jedoch keine derartigen Feldbereiche des Anzeige- und Bedienfelds verdeckt, auf denen dann Informationen dargestellt werden sollen.

Durch eine Ausgestaltung eines Backofens gemäß der Erfindung kann eine sehr kompakte und flächenmäßig minimierte Bedienvorrichtung geschaffen werden. Diesbezüglich war es bisher nicht möglich, elektronische Anzeige- und Bedienfelder mit derartigen manuell bewegbaren Bedienelementen zu kombinieren, um diese gerade im Hinblick auf die genannte spezifische Anordnung und Positionierung zueinander anzubringen. Neben einer kompakten Ausgestaltung der Bedienvorrichtung kann somit auch in besonders vorteilhafter Weise das Bedienelement relativ zum Anzeige- und Bedienfeld bewegt werden und die dann auf dem Anzeige- und Bedienfeld befindlichen Informationen unmittelbar benachbart zum Bedienelement angezeigt werden. Dadurch sind diese Informationen für einen Nutzer auch intuitiv einfach und sicher wahrnehmbar. Denn betätigt er das Bedienelement ist automatisch seine Blickrichtung auf das Bedienelement gerichtet und die aufgrund der positionellen Anordnung zum elektronischen Anzeige- und Bedienfeld auch in unmittelbarer Nähe zum Bedienelement angezeigten Informationen auf dem Anzeige- und Bedienfeld sofort automatisch wahrnehmbar und diese sind im Blickfeld.

Es ist also vorgesehen, dass sich das Bedienelement mit seinem sich in die Fläche des Anzeige- und Bedienfelds hineinerstreckenden Flächenbereich vor dem Anzeige- und Bedienfeld befindet. Bei der Betrachtung der Bedienvorrichtung von vorne ist somit das Bedienelement bereichsweise vor dem Anzeige- und Bedienfeld positioniert, sodass es dieses quasi abdeckt.

Vorzugsweise ist die Bedienblende zumindest an seiner Außenseite beziehungsweise Vorderseite ebenfalls aus Metall ausgebildet. Dadurch kann insbesondere im Einklang mit der metallisch ausgestalteten Vorderseite des Bedienelements ein optisch gleicher Eindruck vermittelt werden. Nicht zuletzt ist durch die Ausgestaltung der Frontwand aus Metall auch eine verbesserte mechanische Stabilität erzielbar.

Vorzugsweise ist vorgesehen, dass die Frontseite des Bedienelements bündig mit der Vorderseite der Bedienblende ist. Dies gewährleistet eine besonders bauraumminimierte Ausgestaltung und das Bedienelement ist somit quasi teilweise eingebettet in die Bedienblende, wodurch es geschützt positioniert ist.

Vorzugsweise ist vorgesehen, dass in dem durch den Versatz der Vorderseite der Abdeckung und der Vorderseite der Bedienblende ausgebildeten Freiraum Auflageelemente mit Auflageflächen ausgebildet sind. Diese Auflageelemente mit den Auflageflächen sind zur Betätigungsunterstützung beziehungsweise zur Betätigungsführung von berührsensitiven Bedienstellen, die in dem Anzeige- und Bedienfeld angeordnet sind, ausgebildet. Vorzugsweise sind die Bedienstellen im unteren Bereich des Anzeige- und Bedienfelds benachbart zu den Auflageelementen ausgebildet. Durch diese Auflageelemente wird somit quasi eine Aufstützmöglichkeit für eine Fingerkuppe ermöglicht und somit ein besonders präzises und zielführendes Betätigen und Berühren dieser berührsensitiven Bedienstellen ermöglicht. Gerade dann, wenn eine große Vielzahl derartiger Bedienstellen, die größenmäßig relativ klein dimensioniert sind, kann durch diese Ausgestaltung mit den Auflageelementen eine besonders fehlerfreie beziehungsweise fehlerarme Betätigung der Bedienvorrichtung gewährleistet werden.

In dem diese Auflageelemente in einem unteren Freiraumbereich angeordnet sind, ist das Aufliegen eines Fingers besonders gestützt und geführt und die dann mit der Fingerfrontseite zu berührende Außenseite der Abdeckung an der Stelle der berührsensitiven Bedienstelle ist dadurch besonders begünstigt.

Insbesondere weisen diese Auflageelemente mit den Auflageflächen außer dieser mechanischen Auflagemöglichkeit keine weitere Funktionalität, insbesondere keine Funktionalität im Hinblick auf eine Betriebsbedingungseinstellung des Backofens auf.

Vorzugsweise ist bei einer derartigen Ausgestaltung somit das Anzeige- und Bedienfeld quasi als Anzeige- und Bedienfeld ausgebildet, da es sowohl Bereiche umfasst, in denen Informationen angezeigt werden, als auch die berührsensitiven Bedienstellen umfasst.

Besonders vorteilhaft ist in diesem Zusammenhang, dass die Auflageflächen der Auflageelemente quasi praktisch an die berührsensitiven Bedienstellen beziehungsweise an die berührbaren Flächenbereiche der Abdeckung angrenzen, sodass nahezu automatisch bei einem Auflegen einer Fingerkuppe auf einen Auflagenflächenbereich die berührsensitive Bedienstelle an der Abdeckung berührt wird.

Vorzugsweise ist vorgesehen, dass eine Auflagefläche eines Auflageelements optisch erkennbar begrenzt ist und eine Fläche einer berührsensitiven Bedienstelle benachbart zu einem zugeordneten Auflageelement zumindest in der Breite an die Breite der Auflagefläche angepasst ist. Dadurch wird für einen Nutzer sehr einfach erkennbar die jeweilige Zone gekennzeichnet, sodass er im Hinblick auf das Berühren der jeweiligen Bedienstelle über die gekennzeichnete Auflagefläche automatisch die richtige Position des Fingers erreicht.

Vorzugsweise ist die Breite einer Auflagefläche kleiner 1 cm, insbesondere kleiner 0,6 cm. Vorzugsweise ist vorgesehen, dass eine Auflagefläche eines Auflageelements von der Frontwand zur Abdeckung hin schräg ansteigend angeordnet ist. Die gesamte Funktionalität der Auflage einer Fingerkuppe einerseits und der zusätzlich erreichten Berührung einer berührsensitiven Bedienstelle an der Abdeckung andererseits wird dadurch begünstigt. Des Weiteren wird dadurch gerade dann, wenn eine entsprechende Kenntlichmachung der Grenzen der Auflageflächen vorgesehen ist, diese Auflageposition für einen Nutzer noch einfacher erkannt.

Vorzugsweise ist vorgesehen, dass in horizontaler Richtung betrachtet beidseits des Bedienelements jeweils zumindest ein Auflageelement ausgebildet ist.

Vorzugsweise ist vorgesehen, dass das Bedienelement in einem aus Metall ausgebildeten Halteprofil angeordnet ist, welches an der Abdeckung angeordnet ist und welches zwischen der Abdeckung und dem Bedienelement angeordnet ist. Diese Ausführung gewährleistet eine stabile Anordnung des Bedienelements.

Insbesondere ist vorgesehen, dass das Bedienelement quasi zentral mittig angeordnet ist und im Hinblick auf die Breite des Anzeige- und Bedienfelds quasi mittig positioniert ist. Die vorab angesprochene Nutzerfreundlichkeit im Hinblick auf die Wahrnehmbarkeit der angezeigten Informationen, die dann immer bei Betätigen des Bedienelements auch im Blickfeld des Nutzers auf der Anzeigeeinheit angezeigt werden, ist dadurch begünstigt.

Vorzugsweise erstreckt sich das Bedienelement soweit in den Flächenbereich des Anzeige- und Bedienfelds hinein, dass die benachbart angeordneten berührsensitiven Bedienstellen in ihrer Höhe innerhalb der Höhe liegen, mit der sich das Bedienelement in die Flächenausmaße des Anzeige- und Bedienfelds hineinerstreckt. Auch dadurch wird eine sehr kompakte und dennoch sehr übersichtliche und intuitiv bedienbare Vorrichtung geschaffen.

Besonders vorteilhaft ist es, dass das Bedienelement formmäßig als Scheibe ausgebildet ist. Im Hinblick auf die geringe Dicke, insbesondere das Einbetten in die Frontwand und das Hineinerstrecken in die Flächenausmaße des Anzeige- und Bedienfelds kann somit ein drehbares Bedienelement geschaffen werden, dessen vorzugsweise ebene Vorderseite durch einen Finger leicht und dennoch zielsicher berührt und geführt werden kann, sodass die Scheibe diesbezüglich auch leicht gedreht und dennoch in ihrer Position präzise orientiert werden kann. Die durch diese Drehbewegung bewirkte Einstellung kann dadurch sehr zielsicher erfolgen.

Vorzugsweise erstreckt sich die Scheibe maximal bis zur Hälfte ihres Durchmessers in ein rechteckiges Anzeige- und Bedienfeld.

Vorzugsweise ist vorgesehen, dass das Bedienelement zumindest bereichsweise magnetisch ausgebildet ist. Gerade in Wechselwirkung mit entsprechend angebrachten Sensoren kann dann die durch die Bewegung hervorgerufene Relativposition detektiert werden und die damit verbundene und zugeordnete Betriebsbedingungseinstellung erfasst und durchgeführt werden. Diesbezüglich weist die Bedienvorrichtung eine Steuereinheit auf.

Insbesondere ist die Fronseite des Bedienelements, welche vorzugsweise kreisförmig ausgebildet ist, aus einem lichtundurchlässigen Material.

Insbesondere ist vorgesehen, dass das Bedienelement als Drehwähler ausgebildet ist und so flachbauend in der Bedienvorrichtung angeordnet ist, dass es insbesondere nur an seiner Frontseite durch einen Nutzer zur Ausführung der Drehbewegung sinnvoll berührbar und bewegbar ist.

Nicht zur Erfindung zugehörig kann vorgesehen sein, dass an zumindest einem Feldbereich des Anzeige- und Bedienfelds die anzuzeigende Information abhängig von der Bewegung des Bedienelements veränderbar ist. Die Dynamik der Informationspräsentation kann somit durch das Bedienelement selbst verändert werden. Dies ist eine hervorzuhebende Funktionalität.

Nicht zur Erfindung zugehörig kann vorgesehen sein, dass eine anzuzeigende Menüoberfläche auf dem Anzeige- und Bedienfeld um das Bedienelement herum anzeigbar ist. Die Menüoberfläche kann übergeordnete Informationsordner umfassen, deren Anwählen durch Drehen des Bedienelements ausgewählt werden können und dann die darin enthaltenen Informationen durch weitere Betätigung des Bedienelements oder anderer Komponenten detaillierter anzeigbar sind. Grundsätzlich kann die Menüoberfläche jedoch auch die damit verbundene Endinformation aufweisen und somit keine Ordnerstruktur darstellen.

Nicht zur Erfindung zugehörend kann die Menüoberfläche dynamisch veränderbar sein. Auch dies kann insbesondere durch das Bedienelement bewirkt werden. Die Möglichkeit der Informationspräsentation auf dem Anzeige- und Bedienfeld ist dadurch multipel erweitert und kann aufgrund der Ausgestaltung der Menüoberfläche und der dynamischen Veränderbarkeit sehr nutzerfreundlich und leicht nachvollziehbar gestaltet werden.

Nicht zur Erfindung zugehörend sind Menüinhalte abhängig von der Stellung, insbesondere der Drehstellung, des Bedienelements aktivierbar.

Nicht zur Erfindung zugehörend umfasst das Aktivieren eines Menüinhalts ein Aufleuchten, insbesondere in einer anderen Lichtfarbe als nicht aktivierte Menüinhalte, von Menüinhalten. Das Aktivieren kann zusätzlich anstatt dazu jedoch auch eine Änderung der Schriftgröße und/oder eine Änderung der Zahlengröße und/oder eine Änderung der Symbolgröße der angezeigten Informationen umfassen. Auch hier kann somit für einen Nutzer einfach und sehr schnell wahrnehmbar die Auswahl signalisiert werden.

Nicht zur Erfindung zugehörend ist vorgesehen, dass eine Vorderseite des Bedienelements zumindest bereichsweise als Feldbereich des Anzeige- und Bedienfelds ausgebildet ist. Dadurch kann das in dem Anzeige- und Bedienfeld angeordnete Bedienelement selbst zur Vergrößerung des Anzeige- und Bedienfelds beitragen. Gerade dann, wenn das Bedienelement als Drehwähler ausgebildet ist und diese nicht als volle Kreisscheibe sondern beispielsweise nur als Ring ausgebildet ist, kann der von dem Ring umschlossene Flächenbereich zur Anzeige von Informationen verwendet werden. Insbesondere kann dieser Bereich dann auch ein elektronisches Anzeige- und Bedienfeld sein.

Nicht zur Erfindung zugehörend ist vorgesehen, dass eine Vorderseite des Bedienelements zumindest bereichsweise als elektronischer Anzeige-Feldbereich ausgebildet ist, auf dem Informationen dargestellt werden können.

Vorzugsweise ist vorgesehen, dass ein von dem Bedienelement umschlossener Flächenbereich ein berührsensitives Bedienfeld aufweist, mit welchem durch Berühren Betriebsbedingungen des Hausgeräts einstellbar sind. Insbesondere wenn das Bedienelement ein Ring ist, kann der Kreisbereich im Inneren des Rings als berührsensitives Bedienfeld ausgebildet sein.

Nicht zur Erfindung zugehörend ist vorgesehen, dass mittels dem Bedienelement oder einem weiteren Bedienteil die Informationstiefe eines auf dem Anzeige- und Bedienfeld anzuzeigenden Menüinhalts einstellbar ist.

So kann nicht zur Erfindung zugehörend vorgesehen sein, dass bei komplexen Bedieninhalten die Anzeigevielfalt durch Trennung in eine auf Tastendruck aufrufbare Funktionsmenüwelt, in der beispielsweise Grundbetriebsarten und Programme des Hausgeräts und dergleichen angezeigt werden können, und eine Optionsmenüwelt, in welcher zusätzliche wählbare Optionen, wie beispielsweise eine Schnellaufheizung bei einem Backofen oder dergleichen, erhöht werden kann.

Es kann auch nicht erfindungsgemäß vorgesehen sein, dass der Nutzer individuell die Menüoberfläche und/oder die Menüinhalte gestaltet, indem er dies mit dem Betätigen des Bedienelements durchführt und insbesondere die nutzerspezifizierte Ausgestaltung dann auch abspeichert. Es kann auch vorgesehen sein, dass dabei individuelle Inhalte zusammengefasst werden oder neu gruppiert werden.

Nicht zur Erfindung zugehörend ist vorgesehen, dass separat zum Bedienelement zumindest ein Bedienteil vorgesehen ist, welches das Ein- und Ausschalten des Hausgeräts ermöglicht. Es kann vorgesehen sein, dass dieses Bedienteil ein berührsensitives Bedienfeld ist. Dieses berührsensitive Bedienfeld kann in dem elektronischen Anzeige- und Bedienfeld angeordnet sein. In einer alternativen Ausgestaltung kann es jedoch auch außerhalb der Ausmaße dieses elektronischen Anzeige- und Bedienfelds ausgebildet sein.

Nicht zur Erfindung zugehörend werden anzuzeigende Inhalte in quasi digitaler Form auf dem elektronischen Anzeige- und Bedienfeld um ein insbesondere zentral im Anzeige- und Bedienfeld angeordnetes und relativ zum Anzeige- und Bedienfeld im Hinblick auf die Betriebsbedingungseinstellung des Hausgeräts bewegbaren Bedienelements herum als Displayinhalt angezeigt. Insbesondere werden beim Drehen des Bedienelements die angezeigten Werte und/oder Informationen im Hinblick auf die Anwahl signalisierend gekennzeichnet. Insbesondere durch Bestätigen oder eine vorgebbare Wartezeit nach dem Anwählen oder dem Wechseln in eine andere Funktion wird der eingestellte Wert übernommen.

Durch das zumindest eine weitere Bedienteil können diesem kontextbezogene, benötigte Funktionen oder Inhalte zugeordnet werden und dadurch die erforderliche Anzahl an zusätzlichen Bedienteilen so gering wie möglich gehalten werden.

Wesentliche Vorteile der Bedienvorrichtung liegen darin, dass durch die Kombination aus quasi einem manuell bewegbaren Bedienelement und einer elektronischen Anzeigeeinheit komplexe Menütiefen in sehr einfacher und übersichtlicher Form dargestellt werden können und durch die positionelle Anordnung der genannten beiden Komponenten eine sehr nutzerfreundliche Bedienbarkeit und sehr zuverlässige und sichere Wahrnehmbarkeit der Informationen erreicht werden können. Die sehr kompakte Ausgestaltung der Bedienvorrichtung ist dabei nicht zu vergessen.

Die Umfeldanzeige bietet durch die zeitgleiche Anzeige von vielen Einstellwerten den größtmöglichen Überblick bei der Einstellung von Parameterwerten im Bezug auf die nutzbare Displayhöhe und ist somit einer Listendarstellung im herkömmlichen Sinne überlegen.

Die kontextbezogene Darstellung von Optionen erlaubt es, nur die jeweils notwendigen Wahlmöglichkeiten anzuzeigen und somit die visuelle Komplexität der Benutzerschnittstelle gering zu halten. Das gleiche gilt auch für die klare Trennung in Funktionsmenüinhalte und Optionsmenüinhalte, welche den jeweiligen Fokus auf Standardoperationen oder nachgelagerte Zusatzoptionen lenkt.

Es kann auch vorgesehen sein, dass anstelle des Halteprofils das scheibenförmige Bedienelement auf einer herkömmlichen Achse geführt und gehalten ist und entsprechend gedreht werden kann und somit lediglich nur dieses scheibenförmige Bedienelement vor dem Anzeige- und Bedienfeld und der Abdeckung angeordnet ist. Eine zusätzliche Anbringung eines derartigen Halteprofils, insbesondere an der Abdeckung, ist dann nicht vorgesehen.

Darüber hinaus kann vorgesehen sein, dass die Bedienvorrichtung eine oder mehrere Lichtquellen aufweist, durch welche das Bedienelement beleuchtbar ist. Diesbezüglich kann die Frontseite beleuchtbar sein oder jedoch auch unmittelbar benachbarte Zonen in dem Anzeige- und Bedienfeld beleuchtet werden, durch die dann auch das Bedienelement zumindest an einer mantelförmigen Seitenwand beleuchtbar ist.

Vorzugsweise ist das Anzeige- und Bedienfeld ein TFT (Thin Film Technology) -Display.

Ausführungsbeispiele der Erfindung werden nachfolgend anhand schematischer Zeichnungen näher erläutert. Es zeigen:
- Fig. 1: eine schematische perspektivische Darstellung eines Ausführungsbeispiels eines erfindungsgemäßen Backofens; und
- Fig. 2: eine perspektivische Darstellung eines Ausführungsbeispiels einer erfindungsgemäßen Bedienvorrichtung als Teilausschnitt.

In den Figuren werden gleiche oder funktionsgleiche Elemente mit den gleichen Bezugszeichen versehen.

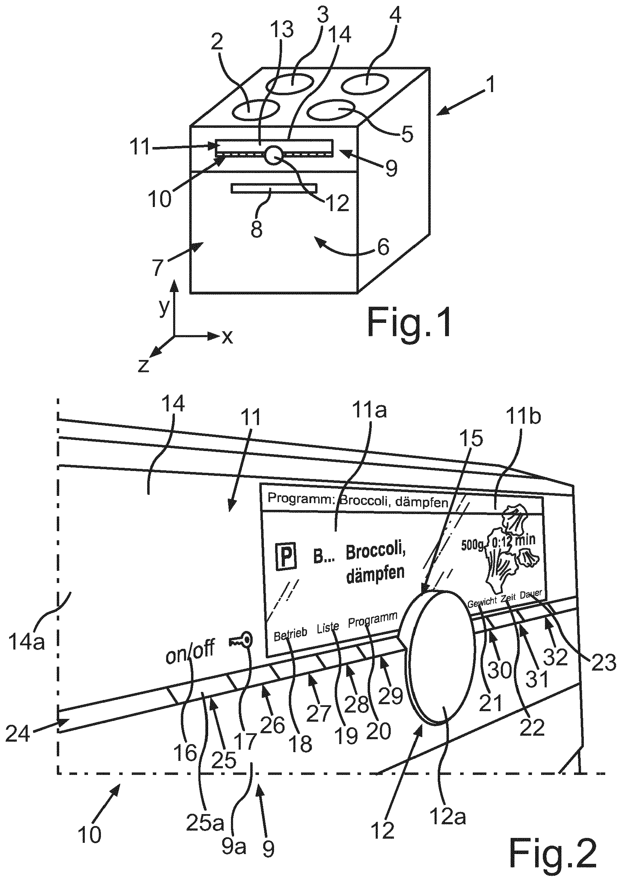

In Fig. 1 ist in einer schematischen Darstellung ein Backofen 1 gezeigt, der Kochzonen 2, 3, 4 und 5 aufweist. Sowohl die Anzahl als auch die Position der Kochzonen 2 bis 5 ist lediglich beispielhaft. Darüber hinaus ist ein Garraum 6 vorgesehen, der durch eine Tür 7 verschließbar ist, die an ihrer Außenseite einen Griff 8 aufweist. Im Ausführungsbeispiel oberhalb der Tür 7 angeordnet ist eine Bedienblende 9 mit einer Bedienvorrichtung 10. Auch hier ist die Position der Bedienvorrichtung 10 lediglich beispielhaft. Sie kann in der Bedienblende 9 jedoch auch direkt in der Tür 7 angeordnet sein.

Die Bedienvorrichtung 10 umfasst ein elektronisches Anzeige- und Bedienfeld 11, welches als TFT-Display ausgebildet ist. Darauf können Informationen, wie Buchstaben und/oder Zahlen und/oder Symbole dynamisch veränderbar angezeigt werden. Darüber hinaus umfasst die Bedienvorrichtung 10 ein Bedienelement 12, welches als manuell betätigbares Bedienelement ausgebildet ist. Es ist somit zur Betriebsbedienungseinstellung des Backofens 1 relativ zum Anzeige- und Bedienfeld 11 bewegbar. Im Ausführungsbeispiel ist das Bedienelement 12 formmäßig als flache Scheibe ausgebildet, die drehbar ist, und das Anzeige- und Bedienfeld 11 ist rechteckig.

Wie aus der Darstellung in Fig. 1 zu erkennen ist, erstreckt sich das Bedienelement 12 mit seiner Kreisscheibenform flächenmäßig in den Flächenbereich 13 des Anzeige- und Bedienfelds 11 hinein, wobei dieser Flächenbereich 13 Rechteckform aufweist und die Fläche durch die Kontur 14 begrenzt ist. Das Bedienelement 12 erstreckt sich etwa bis zur Hälfte in den rechteckigen Flächenbereich 13 hinein, wobei für die Bemessung des Hineinerstreckens die untere horizontale Begrenzungskante des Flächenbereichs 13 dient.

Das Bedienelement 12 ist somit zumindest bereichsweise innerhalb der Fläche 13 des Anzeige- und Bedienfelds 11 angeordnet. Im Ausführungsbeispiel ist dabei vorgesehen, dass sich das Bedienelement 12 bei frontseitiger Betrachtung des Backofens 1 flächenmäßig bereichsweise vor dem Anzeige- und Bedienfeld 11 befindet.

Dies bedeutet hier, dass das rechteckige Anzeige- und Bedienfeld 11 teilweise durch die kreisscheibenförmige Ausgestaltung und dem daraus resultierenden Flächenbereich des Bedienelements 12 verdeckt ist.

In Fig. 2 ist einer perspektivischen Darstellung ein vergrößerter Teilausschnitt der Bedienvorrichtung 10 gezeigt. Es ist zu erkennen, dass vor dem Anzeige- und Bedienfeld eine das Anzeige- und Bedienfeld 11 abdeckende Abdeckung 14 ausgebildet ist, welche im Ausführungsbeispiel eine Glasplatte ist. Sie ist für das von dem Anzeige- und Bedienfeld 11 erzeugte Licht durchlässig.

Das Bedienelement 12 ist auch vor dieser Abdeckung 14 angeordnet. Darüber hinaus ist vorgesehen, dass das Bedienelement 12 in einem Halteprofil 15 angeordnet und gehalten ist. Dieses Halteprofil 15 ist an der Abdeckung 14 angeordnet und insbesondere zumindest bereichsweise zwischen der Abdeckung 14 und dem Bedienelement 12 angeordnet.

Des Weiteren ist zu erkennen, dass das Anzeige- und Bedienfeld 11 Anzeigebereiche 11a aufweist, in denen Buchstaben und/oder Zahlen und/oder Symbole angezeigt werden. Diese können sich dynamisch ändern, und insbesondere eine Änderung abhängig von einer Betätigung des Bedienelements 12 erfolgen.

Darüber hinaus ist ein Bereich 11b auf dem Anzeige- und Bedienfeld 11 vorgesehen, auf dem zumindest auch Bildinformationen oder Videos dargestellt werden können. Zusätzlich können jedoch auch weitere Informationen in Textform und/oder in Zahlen und/oder Symbolen dargestellt werden.

Das Anzeige- und Bedienfeld 11 ist im Ausführungsbeispiel als Anzeige- und Bedienfeld ausgebildet. Dies bedeutet, dass neben Bereichen, in denen Informationen angezeigt werden, auch berührsensitive Bedienstellen vorgesehen sind.

Diese sind im Ausführungsbeispiel in einem unteren Drittel der Höhe des Anzeige- und Bedienfelds 11 und somit auch der Abdeckung 14 ausgebildet. Im Ausführungsbeispiel sind dies die berührsensitiven Bedienstellen 16, 17, 18, 19, 20 sowie auf der gegenüberliegenden Seite des im Hinblick auf die Breite des Anzeige- und Bedienfelds 11 mittig positionierten Bedienelements 12 die berührsensitiven Bedienstellen 21, 22 und zumindest 23.

Wie zu erkennen ist, sind die berührsensitiven Bedienstellen 16 bis 23 durch Text und/oder Symbole auch optisch gekennzeichnet, sodass der Nutzer die jeweilig zugeordneten und hinterlegten Funktionalitäten erkennen kann.

Bei der Bedienvorrichtung 10 ist vorgesehen, dass eine Vorderseite 14a der Abdeckung 14 gegenüber einer Vorderseite 9a der Bedienblende 9 nach hinten versetzt ist. Dies bedeutet, dass in z-Richtung betrachtet (Koordinatensystem diesbezüglich der Fig. 1 gezeichnet) die Vorderseite 14a weiter hinten angeordnet ist als die Vorderseite 9a.

In diesem Zusammenhang ist somit zwischen der Vorderseite 14a und der Vorderseite 9a ein Freiraum 24 ausgebildet. In diesem Freiraum sind im Ausführungsbeispiel Auflageelemente 25, 26, 27, 28, 29, 30, 31 und 32 ausgebildet. Diese sind von der Vorderseite 9a zur Vorderseite 14a hin schräg nach oben verlaufend orientiert und weisen dazu entsprechende Auflageflächen auf. Der Übersichtlichkeit dienend ist lediglich eine Auflagefläche 25a des Auflageelements 25 mit einem Bezugszeichen versehen.

Wie des Weiteren zu erkennen ist, ist jedes Auflageelement 25 bis 32 und somit auch die Auflagefläche 25a in seiner Breite optisch kenntlich gemacht begrenzt. Dadurch kann ein Nutzer sehr einfach erkennen, wo sich dieser Flächenbereich erstreckt. Diese Breite der Auflagefläche 25a ist so bemessen, dass er der Breite eines direkt benachbart angeordneten berührsensitiven Bedienbereichs beziehungsweise einer berührsensitive Bedienstelle 16 bis 23 entspricht.

Zur Betriebsbedingungseinstellung des Backofens 1 über eine der berührsensitiven Bedienstellen 16 bis 23 ist die Anordnung und die Ausgestaltung der Ausmaße dieser berührsensitiven Bedienstellen 16 bis 23 einerseits und der Auflageelemente 25 bis 32 andererseits so gegeben, dass der Nutzer mit einem Finger und insbesondere einer vorderen Fingerkuppe einerseits auf der Auflagefläche 25a aufsitzt, und aufgrund deren Schmalheit in z-Richtung jedoch automatisch auch die Frontseite 14a berührt und somit die zugeordnete berührsensitive Bedienstelle 16 bis 23 berührt.

Die Auflageelemente 25 bis 32 weisen hier keine weitere Funktionalität auf und dienen quasi nur als Auflage und Abstützung für den Finger. Durch ihre Ausgestaltung und Position vermitteln sie jedoch den Eindruck von aktiv betätigbaren Bedientasten, so dass der Nutzer zur Betriebseinstellung automatisch dazu verleitet wird, den Finger auf die gewünschte Auflagefläche zu legen.

Wie im Ausführungsbeispiel zu erkennen ist, ist eine Vorderseite 12a des Bedienelements 12 im Wesentlichen bündig mit der Vorderseite 9a. Es kann auch vorgesehen sein, dass die Vorderseite 12a minimal gegenüber der Vorderseite 9a nach vorne übersteht, beispielsweise kleiner 1 mm diesbezüglich nach vorne übersteht.

Im Ausführungsbeispiel ist sowohl die Vorderseite 12a als auch die Vorderseite 9a aus Metall ausgebildet.

Durch Drehen des Bedienelements 12 können Funktionsteileinheiten des Backofens 1 ausgewählt und/oder Betriebsparameter dieser Funktionsteileinheiten eingestellt werden.

Als Funktionsteileinheiten können beispielsweise die Kochzonen 2 bis 5 oder der Garraum 6 bzw. die zugehörigen Heizkörper ausgewählt werden. Betriebsparameter dieser Funktionsteileinheiten sind die Heizstufen der jeweils zugeordneten Heizkörper.

Wie zu erkennen ist, ist im Ausführungsbeispiel vorgesehen, dass die Bedienblende 9 das Anzeige- und Bedienfeld 11 rahmenartig umgibt.

Gemäß der Darstellung in Fig. 2 ist zu erkennen, dass die Belegung der berührsensitiven Bedienstellen 16 bis 23 beispielsweise durch eine Bedruckung hinter der als Glasplatte ausgebildeten Abdeckung 14 oder durch Softkeys in dem Display dargestellt sind. Die eigentliche Elektronik des Anzeige- und Bedienfelds 11 befindet sich hinter der Abdeckung 14.

### Bezugszeichenliste

- 1: Backofen
- 2 bis 5: Kochzonen
- 6: Garraum
- 7: Tür
- 8: Griff
- 9: Bedienblende
- 9a: Vorderseite
- 10: Bedienvorrichtung
- 11: Anzeige- und Bedienfeld
- 11a: Anzeigebereich
- 11b: Bereich
- 12: Bedienelement
- 12a: Frontseite
- 13: Flächenbereich
- 14: Abdeckung
- 14a: Vorderseite
- 15: Halteprofil
- 16 bis 23: Bedienstellen
- 24: Freiraum
- 25 bis 32: Auflageelemente
- 25a: Auflagefläche

## Patentansprüche

1. Backofen (1), mit einer Bedienvorrichtung (10) für den Backofen(1), mit einem elektronischen Anzeige- und Bedienfeld (11), welches mit einer für das Licht des Anzeige- und Bedienfelds (11) durchlässigen Abdeckung (14) abgedeckt ist, wobei ein Bedienelement (12) ausgebildet ist, welches zur Einstellung von Betriebsbedingungen des Backofens (1) relativ zum Anzeige- und Bedienfeld (11) bewegbar ist, **dadurch gekennzeichnet, dass** die Abdeckung (14) und das Anzeige- und Bedienfeld (11) von einer Bedienblende (9) der Bedienvorrichtung (10) zumindest bereichsweise umrandet sind, wobei eine Vorderseite (14a) der Abdeckung (14) nach hinten versetzt zu einer Vorderseite (9a) der Bedienblende (9) angeordnet ist, und in einem durch den Versatz der Vorderseite (14a) der Abdeckung (14) und der Vorderseite (9a) der Bedienblende (9) ausgebildeten Freiraum (24) Auflageelemente (25 bis 32) mit Auflageflächen (25a) zur Betätigungsunterstützung von berührsensitiven Bedienstellen (16 bis 23) des Anzeige- und Bedienfelds (11) ausgebildet sind, wobei die Bedienstellen (16 bis 23) im unteren Bereich des Anzeige- und Bedienfelds (11) benachbart zu den Auflageelementen (25 bis 32) ausgebildet sind, wobei das Bedienelement (12) an der Abdeckung (14) angeordnet ist, wobei das Bedienelement (12) zumindest bereichsweise innerhalb der Fläche (13) des Anzeige- und Bedienfelds (11) angeordnet ist, und wobei sich das Bedienelement (12) mit seinem sich in die Fläche (13) des Anzeige- und Bedienfelds (11) hinein erstreckenden Flächenbereich vor dem Anzeige- und Bedienfeld (11) befindet.

2. Backofen (1) nach Anspruch 1, **dadurch gekennzeichnet, dass** eine Auflagefläche (25a) eines Auflageelements (25 bis 32) optisch erkennbar begrenzt ist und eine Fläche einer berührsensitiven Bedienstelle (16 bis 23) benachbart zu einem zugeordneten Auflageelement (25 bis 32) zumindest in der Breite an die Breite der Auflagefläche (25a) angepasst ist.

3. Backofen (1) nach Anspruch 1 oder 2, **dadurch gekennzeichnet, dass** eine Auflagefläche (25a) von der Bedienblende (9) zur Abdeckung (14) hin schräg ansteigend angeordnet ist.

4. Backofen (1) nach einem der vorhergehenden Ansprüche, **dadurch gekennzeichnet, dass** die Breite einer Auflagefläche (25a) kleiner 1 cm, insbesondere kleiner 0,6 cm beträgt.

5. Backofen (1) nach einem der Ansprüche 1 bis 4, **dadurch gekennzeichnet, dass** in horizontaler Richtung beidseits des Bedienelements (12) jeweils zumindest ein Auflageelement (25 bis 32) ausgebildet ist.

6. Backofen (1) nach einem der Ansprüche 1 bis 5, **dadurch gekennzeichnet, dass** das Bedienelement (12) in einem aus Metall ausgebildeten Halteprofil (15) angeordnet ist, welches an der Abdeckung (14) angeordnet ist.

7. Backofen (1) nach einem der Ansprüche 1 bis 6, **dadurch gekennzeichnet, dass** die Frontseite (12a) des Bedienelements (12) bündig mit der Vorderseite (9a) der Bedienblende (9) ist oder kleiner 1 mm nach vorne über die Vorderseite (9a) der Bedienblende (9) übersteht.

8. Backofen (1) nach einem der Ansprüche 1 bis 7, **dadurch gekennzeichnet, dass** die Frontseite (12a) des Bedienelements (12) aus Metall ist und/oder die Vorderseite (9a) der Bedienblende (9) zumindest bereichsweise aus Metall ist.

9. Backofen (1) nach einem der vorhergehenden Ansprüche 1 bis 8, **dadurch gekennzeichnet, dass** das Bedienelement (12) formmäßig eine Scheibe ist und insbesondere als Drehwähler ausgebildet ist.

10. Backofen (1) nach einem der Ansprüche 1 bis 9, **dadurch gekennzeichnet, dass** das Bedienelement (12) zumindest bereichsweise magnetisch ausgebildet ist.

## Claims

1. Baking oven (1), having an operating device (10) for the baking oven (1), having an electronic control and display panel (11), which is covered with a cover (14) permeable to light from the control and display panel (11), wherein an operating element (12) is formed, which can be moved relative to the control and display panel (11) for the purpose of setting operating conditions of the baking oven (1), **characterised in that** the cover (14) and the control and display panel (11) are bordered, at least in regions, by a control panel (9) of the operating device (10), wherein a front side (14a) of the cover (14) is arranged rearwardly offset with respect to a front side (9a) of the control panel (9), and supporting elements (25 to 32) with supporting surfaces (25a) for assisting the actuation of touch-sensitive control sections (16 to 23) of the control and display panel (11) are formed in a clearance (24) formed by the offsetting of the front side (14a) of the cover (14) and the front side (9a) of the control panel (9), wherein the control sections (16 to 23) in the lower region of the control and display panel (11) are formed adjacent to the supporting elements (25 to 32), wherein the operating element (12) is arranged on the cover (14), wherein the operating element (12) is arranged at least in regions within the area (13) of the control and display panel (11), and wherein the operating element (12) with its surface area extending into the area (13) of the control and display panel (11) is disposed in front of the control and display panel (11).

2. Baking oven (1) according to claim 1, **characterised in that** a supporting surface (25a) of a supporting element (25 to 32) is delimited in an optically visible manner and an area of a touch-sensitive control section (16 to 23) adjacent to an assigned supporting element (25 to 32) is adjusted at least in terms of width to the width of the supporting surface (25a).

3. Baking oven (1) according to claim 1 or 2, **characterised in that** a supporting surface (25a) is arranged so as to rise obliquely away from the control panel (9) toward the cover (14).

4. Baking oven (1) according to one of the preceding claims, **characterised in that** the width of a supporting surface (25a) is smaller than 1 cm, in particular smaller than 0.6 cm.

5. Baking oven (1) according to one of claims 1 to 4, **characterised in that** at least one supporting element (25 to 32) is formed in a horizontal direction on both sides of the operating element (12) in each case.

6. Baking oven (1) according to one of claims 1 to 5, **characterised in that** the operating element (12) is arranged in a retaining profile (15) formed from metal, which is arranged on the cover (14).

7. Baking oven (1) according to one of claims 1 to 6, **characterised in that** the front side (12a) of the operating element (12) is flush with the front side (9a) of the control panel (9) or projects less than 1mm forward beyond the front side (9a) of the control panel (9).

8. Baking oven (1) according to one of claims 1 to 7, **characterised in that** the front side (12a) of the control element (12) is made from metal and/or the front side (9a) of the control panel (9) is made from metal, at least in regions.

9. Baking oven (1) according to one of the preceding claims 1 to 8, **characterised in that** the control element (12) is formed in the shape of a disc and in particular as a rotary selector.

10. Baking oven (1) according to one of claims 1 to 9, **characterised in that** the control element (12) is formed to be magnetic, at least in regions.

## Revendications

1. Four (1) avec un dispositif de commande (10) pour le four (1), avec un champ d'affichage et de commande électronique (11), revêtu d'un revêtement (14) perméable à la lumière du champ d'affichage et de commande (11), dans lequel un élément de commande (12) déplaçable par rapport au champ d'affichage et de commande (11) pour le réglage de conditions d'exploitation du four (1) est exécuté, **caractérisé en ce que** le revêtement (14) et le champ d'affichage et de commande (11) sont entourés au moins par sections par un bandeau de commande (9) du dispositif de commande (10), dans lequel un côté avant (14a) du revêtement (14) est disposé en départ arrière par rapport à un côté avant (9a) du bandeau de commande (9) et des éléments d'appui (25 à 32) avec des surfaces d'appui (25a) visant à soutenir l'actionnement de zones de commande sensitives (16 à 23) du champ d'affichage et de commande (11) sont exécutés dans un espace libre (24) constitué par le déport du côté avant (14a) du revêtement (14) et le côté avant (9a) du bandeau de commande (9), dans lequel les zones de commande (16 à 23) sont exécutées, dans la zone inférieure du champ d'affichage et de commande (11), dans le voisinage des éléments d'appui (25 à 32), dans lequel l'élément de commande (12) est disposé sur le revêtement (14), dans lequel l'élément de commande (12) est au moins disposé par sections au sein de la surface (13) du champ d'affichage et de commande (11), et dans lequel la zone de surface de l'élément de commande (12) s'étendant au sein de la surface (13) du champ d'affichage et de commande (11) se trouve devant le champ d'affichage et de commande (11).

2. Four (1) selon la revendication 1, **caractérisé en ce qu'**une surface d'appui (25a) d'un élément d'appui (25 à 32) est délimité de façon visuellement perceptible et une surface d'une zone de commande sensitive (16 à 23) est, dans le voisinage d'un élément d'appui affecté (25 à 32), adaptée au moins en largeur à la largeur de la surface d'appui (25a).

3. Four (1) selon la revendication 1 ou 2, **caractérisé en ce qu'**une surface d'appui (25a) du bandeau de commande (9) est disposée en biais croissant vers le revêtement (14).

4. Four (1) selon l'une des revendications précédentes, **caractérisé en ce que** la largeur d'une surface d'appui (25a) est inférieure à 1cm, en particulier inférieure à 0,6 cm.

5. Four (1) selon l'une des revendications 1 à 4, **caractérisé en ce qu'**au moins un élément d'appui (25 à 32) respectif est exécuté dans le sens horizontal de chaque côté de l'élément de commande (12).

6. Four (1) selon l'une des revendications 1 à 5, **caractérisé en ce que** l'élément de commande (12) est disposé dans un profilé de maintien exécuté en métal (15), disposé sur le revêtement (14).

7. Four (1) selon l'une des revendications 1 à 6, **caractérisé en ce que** le côté avant (12a) de l'élément de commande (12) forme une surface plane avec le côté avant (9a) du bandeau de commande (9) ou fait saille de moins d'1 mm vers l'avant par rapport au côté avant (9a) du bandeau de commande (9).

8. Four (1) selon l'une des revendications 1 à 7, **caractérisé en ce que** le côté avant (12a) de l'élément de commande (12) est en métal et/ou le côté avant (9a) du bandeau de commande (9) est au moins par sections en métal.

9. Four (1) selon l'une des revendications précédentes 1 à 8, **caractérisé en ce que** l'élément de commande (12) revêt la forme d'un disque et est en particulier exécuté sous forme de commutateur rotatif.

10. Four (1) selon l'une des revendications 1 à 9, **caractérisé en ce que** l'élément de commande (12) est exécuté de façon aimantée au moins par sections.
